# FASCICULE DE BREVET EUROPEEN

(11) **EP 3 264 460 B1**
(45) Date de publication et mention de la délivrance du brevet: **28.08.2024**
(21) Numéro de dépôt: 17150830.2
(22) Date de dépôt: 10.01.2017
(51) Int. Cl.: H01L 23/58, G06F 21/87, G06K 19/073, G06F 21/75

(54) **PROCÉDÉ DE PROTECTION D'UN CIRCUIT INTÉGRÉ, ET CIRCUIT INTÉGRÉ CORRESPONDANT**
VERFAHREN ZUM SCHUTZ EINES INTEGRIERTEN SCHALTKREISES, UND ENTSPRECHENDER INTEGRIERTER SCHALTKREIS
INTEGRATED CIRCUIT PROTECTION METHOD, AND CORRESPONDING INTEGRATED CIRCUIT

(30) Priorité: 30.06.2016 FR 1656233
(43) Date de publication de la demande: 03.01.2018
(73) Titulaire: STMicroelectronics (Rousset) SAS, 13790 Rousset (FR)
(72) Inventeur: ORDAS, Thomas, 83470 Pourcieux (FR); SARAFIANOS, Alexandre, 13530 Trets (FR); MARINET, Fabrice, 13790 Châteauneuf-le-Rouge (FR); CHESNAIS, Stéphane, 13710 Fuveau (FR)
(74) Mandataire: Casalonga

(56) Documents cités:
- FR-A1- 2 971 366
- FR-A1- 2 985 059
- US-B1- 6 496 119

## Description

Des modes de mise en oeuvre et de réalisation de l'invention concernent les circuits intégrés, et plus particulièrement la protection des circuits intégrés contre des attaques par injection de fautes (DFA, « Differential Fault Analysis » selon l'appellation anglo-saxonne bien connue de l'homme du métier), et tout particulièrement contre les attaques par injection de fautes réalisées à l'aide d'un rayonnement électromagnétique externe.

Parmi les types d'attaques connus de l'homme de métier, on peut citer l'attaque par sondage (« Probing » selon l'appellation anglo-saxonne), qui comporte l'insertion d'une sonde dans la partie d'interconnexion d'un circuit afin de lire les signaux électriques émis par les différents composants, puis de les analyser afin d'obtenir des informations sur le fonctionnement du circuit.

Afin de se protéger contre ce type d'attaque, il est classiquement possible de placer un bouclier de protection dans la zone supérieure de la partie d'interconnexion du circuit. Le bouclier comporte classiquement des pistes métalliques dans lesquelles on fait circuler des signaux électriques. Ainsi, lors de l'insertion de la sonde de lecture, les pistes métalliques sont détériorées et les signaux ne peuvent plus circuler dans le bouclier. Le circuit peut donc détecter une intrusion et par exemple générer un signal d'alarme afin que soit prise une action appropriée.

Un autre type d'attaque connu est l'attaque par injection de fautes, qui consiste en l'injection d'une faute par exemple au moyen d'une bobine d'injection électromagnétique générant un rayonnement électromagnétique, de façon à modifier par exemple la valeur d'un ou plusieurs bits de résultat temporaire d'un calcul sans détériorer l'intégrité physique du circuit.

Une analyse du comportement du circuit en réponse à ces injections peut permettre d'obtenir des informations sécurisées comme par exemple des clés de chiffrement.

Il existe des moyens pour se protéger contre ce type d'attaque, comme par exemple des calculs cryptographiques comprenant des vérifications multiples des calculs effectués.

Cependant, ces méthodes peuvent être contournées par des méthodes d'injection de fautes plus élaborées, comme par exemple les attaques par double injection de fautes.

Le document FR 2 985 059 A1 montre un procédé de protection d'un circuit intégré contre des attaques et un circuit intégré comportant un dispositif de protection contre des attaques. En particulier, ce document montre un procédé de protection d'un circuit intégré contre les attaques par injection de fautes à l'aide d'un rayonnement électromagnétique externe, ledit circuit intégré comportant un bouclier métallique réalisé dans sa partie d'interconnexion, le procédé comprenant une détection via le bouclier métallique dudit rayonnement électromagnétique, la détection comprenant un placement du bouclier dans une configuration d'antenne réceptrice et une détection d'au moins un signal supérieur à un seuil circulant dans le bouclier.

Ainsi, selon un mode de réalisation, il est proposé de protéger de façon matérielle et simple un circuit intégré contre les attaques par injection de fautes électromagnétiques.

Selon un aspect de l'invention, il est proposé un procédé de protection d'un circuit intégré contre les attaques par injection de fautes à l'aide d'un rayonnement électromagnétique externe, ledit circuit intégré comportant un bouclier métallique réalisé dans sa partie d'interconnexion.

Le procédé selon l'invention comprend une détection via le bouclier métallique dudit rayonnement électromagnétique.

Ainsi on utilise avantageusement un bouclier généralement présent pour une protection contre les attaques par sondage (« probing ») pour la détection d'un champ électromagnétique susceptible de générer une injection de fautes dans le circuit.

Selon l'invention, la détection comprend également un placement du bouclier dans une configuration d'antenne réceptrice et une détection d'au moins un signal supérieur à un seuil circulant dans le bouclier.

Un champ électromagnétique susceptible de générer une injection de faute est en pratique un champ ayant une intensité supérieure à un seuil qui se traduit par la circulation d'un signal supérieur à un seuil dans le bouclier.

Et ce seuil, qui dépend de chaque circuit, est par exemple déterminable lors d'une phase de caractérisation du circuit intégré à l'aide d'une bobine d'injection électromagnétique de test capable de générer des rayonnements électromagnétiques de test ayant des valeurs réglables.

Selon l'invention, un réglage de la sensibilité de la détection comportant une connexion d'une résistance variable au bouclier métallique est mis en oeuvre.

Préalablement à ladite détection, on peut effectuer une vérification de l'intégrité du bouclier métallique qui comprend un contrôle d'une interruption éventuelle de la circulation d'un courant dans le bouclier.

Selon un autre aspect de l'invention, il est proposé un circuit intégré comportant un dispositif de protection comprenant un bouclier métallique réalisé dans sa partie d'interconnexion.

Le circuit selon l'invention comprend des moyens de détection comprenant le bouclier métallique configurés pour détecter une présence d'un rayonnement électromagnétique externe représentatif d'une attaque par injection de fautes.

Un champ électromagnétique représentatif d'une attaque par injection de faute correspond classiquement à une impulsion électromagnétique dont l'amplitude atteint ou dépasse un seuil prédéterminé, qui peut varier d'un circuit à un autre.

Les moyens de détection selon l'invention comportent des premiers moyens de commande aptes à placer le bouclier dans une configuration d'antenne réceptrice, un module d'interface couplé au bouclier et configurés pour détecter un premier signal électrique circulant dans l'antenne et délivrer un premier signal de contrôle, et des moyens de contrôle configurés pour recevoir le premier signal de contrôle.

Selon l'invention, le bouclier comprend en outre des moyens de réglage agissant comme une résistance variable connectés au bouclier et configurés pour régler la sensibilité de la détection.

Selon un mode de réalisation, le circuit intégré comporte des moyens de vérification configurés pour vérifier l'intégrité du bouclier.

Les moyens de vérification peuvent comprendre des deuxièmes moyens de commande configurés pour transmettre un deuxième signal électrique à une entrée du bouclier et le module d'interface peut être configuré pour détecter la présence du deuxième signal électrique à la sortie du bouclier et délivrer un deuxième signal de contrôle, et les moyens de contrôle sont configurés pour recevoir le deuxième signal de contrôle.

Le circuit intégré peut également comprendre un étage de commande configurable par les moyens de contrôle et formant dans une première configuration les premier moyens de commande et dans une deuxième configuration les deuxième moyens de commande.

Selon un mode de réalisation, le bouclier métallique comporte au moins une piste métallique comportant une première extrémité et une deuxième extrémité, et l'étage configurable comporte un premier transistor connecté entre la première borne de la piste métallique et la masse, un générateur configuré pour générer le deuxième signal électrique, une porte de transmission connectée entre la première borne et le générateur, et les moyens de contrôle configurés pour commander le premier transistor et la porte de transmission, de sorte que dans la première configuration le premier transistor est bloqué et la porte de transmission est dans un état passant, et dans la deuxième configuration le premier transistor est passant et la porte de transmission est bloquée.

Selon un mode de réalisation, le module d'interface comporte une première bascule D comportant une première entrée connectée à une borne d'alimentation délivrant une tension d'alimentation, une première entrée d'horloge connectée à la deuxième borne, et une première sortie, et une deuxième bascule D comportant une deuxième entrée connectée à la première sortie, une deuxième entrée d'horloge connectée à un générateur d'horloge délivrant un signal d'horloge, et une deuxième sortie configurée pour délivrer le premier ou le deuxième signal de contrôle respectivement à la réception du premier ou du deuxième signal électrique sur la première entrée.

Le bouclier peut comprendre en outre des moyens de protection connectés à ladite piste métallique et configurés pour protéger le circuit intégré contre des surtensions.

Le bouclier peut comporter une pluralité de pistes métalliques.

Selon un autre aspect, il est proposé un système comportant un circuit intégré tel que décrit ci-dessus, le système pouvant être une carte à puce ou un système informatique.

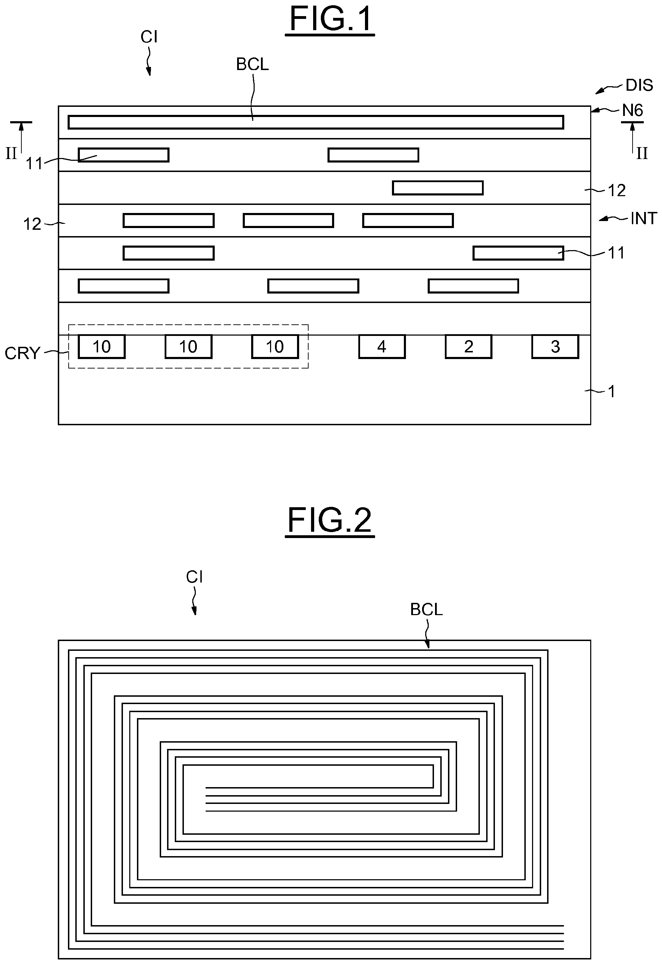

D'autres avantages et caractéristiques de l'invention apparaîtront à l'examen de la description détaillée de modes de mise en oeuvre et de réalisation, nullement limitatifs, et des dessins annexés sur lesquels
- les figures 1 à 5 illustrent des modes de réalisation de l'invention.

La figure 1 illustre un exemple de circuit intégré CI comprenant un dispositif de protection DIS, et la figure 2 est une vue en coupe selon la ligne de coupe II-II de la figure 1.

Le circuit intégré CI comporte un substrat semi-conducteur 1, dans lequel une pluralité de composants 10 a été réalisée.

Les composants comportent ici notamment des portes logiques formant par exemple un circuit cryptographique CRY destiné notamment à réaliser des opérations de manière sécurisée.

Le substrat 1 est surmonté par une région d'interconnexion INT (connue par l'homme du métier sous l'acronyme anglo-saxon BEOL : « Back End Of Line »), comportant plusieurs niveaux de métal comportant chacun une ou plusieurs pistes métalliques 11 enrobées dans un matériau isolant 12 (« Intermetal dielectric » selon la dénomination anglo-saxonne bien connue de l'homme du métier).

Certaines des pistes métalliques 11 des niveaux de métal sont des pistes d'interconnexion reliant entre eux certains au moins des composants 10 du circuit cryptographique CRY par l'intermédiaire de vias (non-représentés sur les figures à des fins de simplification).

D'autres pistes métalliques peuvent être classiquement des pistes de redistribution de la tension d'alimentation Vdd du circuit intégré CI, ou reliée à la masse GND.

Le circuit intégré comporte dans cet exemple six niveaux de métallisation. Le niveau six N6 de métallisation, qui est ici le niveau le plus haut, comporte un bouclier BCL qui comprend ici plusieurs pistes métalliques parallèles disposées de façon à former une spirale rectangulaire. Les extrémités de chaque piste métallique de la spirale ne sont pas directement couplées par l'intermédiaire de vias à des composants du circuit cryptographique CRY, mais comme il sera vu ci-après à des moyens de vérification 2 et à des moyens de détection 3 réalisés dans et sur le substrat 1.

Le bouclier BCL, les moyens de vérification 2 et les moyens de détection 3 font partie ici du dispositif de protection DIS.

Les moyens de vérification 2 sont configurés pour générer un signal électrique dans chaque piste métallique et pour réceptionner ce signal électrique afin de vérifier l'intégrité physique du bouclier. Ainsi, en cas d'attaque par sondage, les pistes métalliques sont sectionnées par la sonde et les moyens de vérification ne réceptionnent plus le signal généré. Des moyens de contrôle 4 peuvent alors générer un signal d'alarme. Le circuit est donc protégé contre les attaques par sondage.

Les moyens de détection 3 sont configurés pour détecter les signaux électriques induits dans le bouclier par un champ ou rayonnement électromagnétique externe, et pour envoyer le cas échéant un signal aux moyens de contrôle 4 du circuit. En réponse à ce signal, les moyens de contrôle 4 peuvent également générer un signal d'alarme.

Dans cet exemple, les moyens de contrôle 4 sont réalisés par un circuit logique réalisé dans le substrat 1 du circuit intégré CI. Cela étant, il serait envisageable d'implémenter les moyens de contrôle 4 de façon logicielle par exemple au sein d'un microcontrôleur.

Ainsi, le bouclier BCL est utilisé dans ce cas comme une antenne réceptrice, et est apte à détecter un champ électromagnétique particulièrement intense généré par une bobine d'injection électromagnétique utilisée par exemple lors d'une attaque par injection de faute électromagnétique.

Le circuit intégré CI comprend donc ici deux systèmes de protection le protégeant contre deux types d'attaques différents, en utilisant un moyen commun, à savoir le bouclier BCL. Cela est notamment avantageux en termes de procédé de fabrication et de coût de réalisation.

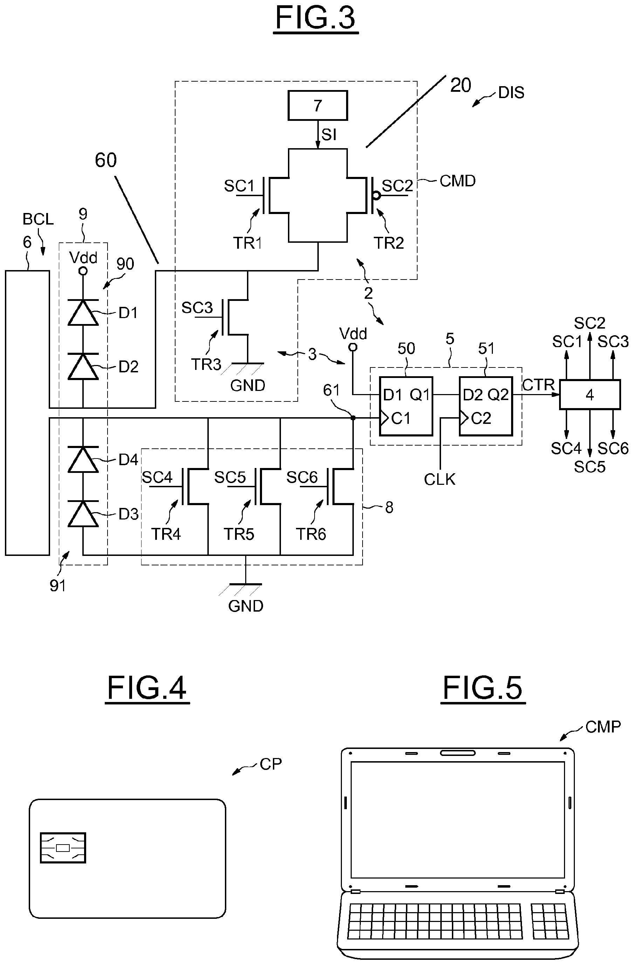

La figure 3 est une représentation schématique du point de vue électrique d'un dispositif de protection DIS selon un mode de réalisation de l'invention, qui comprend les moyens de vérification 2 et les moyens de détection 3.

Dans ce mode de réalisation, le bouclier BCL comporte une seule piste métallique 6.

Les moyens de détection 3 comportent le bouclier BCL, un module d'interface 5, les moyens de contrôle 4, et un étage de commande configurable CMD configuré dans une première configuration pour former des premiers moyens de commande.

Les moyens de vérification 2 comporte le bouclier BCL, le module d'interface 5, les moyens de contrôle 4, et l'étage configurable CMD configuré dans une deuxième configuration pour former des deuxièmes moyens de commande.

Les moyens de contrôle 4 sont configurés pour placer l'étage configurable CMD dans sa première configuration ou dans sa deuxième configuration à partir de signaux logiques de commande SC1, SC2, et SC3.

L'étage de configurable CMD comprend ici une porte de transmission 20 (« Path gate » selon l'appellation anglaise bien connue de l'homme du métier) électriquement connectée à une première extrémité du bouclier BCL, ou première borne 60.

La porte de transmission 20 comprend classiquement un transistor NMOS TR1 et un transistor PMOS TR2, ayant leurs sources mutuellement électriquement connectées et leurs drains mutuellement électriquement connectés.

La porte de transmission 20 présente l'avantage d'être particulièrement fiable, mais tout autre type d'interrupteur aurait pu être envisagé ici.

Les drains des transistors TR1 et TR2 sont couplés à la première borne 60, et les sources des transistors TR1 et TR2 sont couplés à des moyens de génération de signal 7, par exemple ici une source de courant.

Ici, les moyens de contrôle 4 sont couplés aux grilles des transistors TR1 et TR2 et contrôlent donc la porte de transmission 20 par l'intermédiaire des signaux SC1 et SC2, le signal SC2 étant le signal complémentaire du signal SC1.

Ainsi, afin de rendre la porte de transmission 20 passante, et donc de transmettre un premier signal S1 généré par les moyens de génération de signal 7 à la piste métallique 6, le signal SC1, ici un potentiel non nul, est appliqué par les moyens de contrôle 4 à la grille du transistor NMOS TR1 et le signal SC2, ici un potentiel nul, est appliqué par les moyens de contrôle 4 à la grille du transistor PMOS TR2.

L'étage configurable CMD comporte en outre un troisième transistor TR3 couplé entre la première borne 60 et la masse GND, et contrôlé par le signal SC3 des moyens de contrôle 4.

Le module d'interface 5 comporte une première bascule « D » 50 comportant classiquement une première entrée de donnée D1, une première entrée d'horloge C1, et une première sortie Q1, et une deuxième bascule « D » 51 comportant une deuxième entrée de donnée D2, une deuxième entrée d'horloge C2 et une deuxième sortie Q2.

Pour chaque apparition de front sur leur entrée d'horloge respective C1 et C2, les bascules 50 et 51 recopient leur entrée de donnée respective D1 et D2 sur leur sortie respective Q1 et Q2.

La première entrée d'horloge D1 de la première bascule 50 est couplée à la deuxième borne 61 de la piste métallique 6, et la première entrée de données D1 est couplée à une borne d'alimentation du circuit intégré CI, qui délivre le signal Vdd.

La deuxième entrée de donnée D2 est couplée à la première sortie Q1 de la première bascule 50 et la deuxième entrée d'horloge C2 est couplée à un générateur de signal d'horloge (non représenté) délivrant un signal CLK, par exemple le générateur de signal d'horloge utilisé pour cadencer les opérations sécurisées du circuit cryptographique CRY. La deuxième sortie Q2 de la deuxième bascule 51 est couplée aux moyens de contrôle 4 du circuit intégré CI.

Ainsi, lors de l'apparition d'un signal sur la première entrée d'horloge C1, le signal Vdd est recopié sur la première sortie Q1 et transmis à la deuxième entrée D2. A chaque front du signal d'horloge CLK, le signal Vdd est donc également recopié sur la deuxième sortie Q2 et transmis aux moyens de contrôle 4.

Le signal Vdd en sortie du module d'interface 5 peut donc être considéré comme un signal de contrôle CTR.

Ainsi, grâce à la deuxième bascule 51, le module d'interface 5 délivrera avantageusement le signal de contrôle CTR de façon synchrone, c'est-à-dire à l'apparition d'un front d'horloge.

Comme il a été vu ci-avant, le dispositif DIS possède un étage de commande configurable CMD comportant le troisième transistor TR3 et la porte de transmission 20, et l'étage configurable CMD peut être configuré dans sa première configuration ou dans sa deuxième configuration grâce aux signaux de contrôle SC1, SC2 et SC3.

Dans la première configuration, le troisième transistor TR3 est bloqué par l'application du signal SC3 sur sa grille, par exemple ici un potentiel nul. Cette configuration permet de vérifier l'intégrité physique du bouclier BCL.

A cette fin, un premier signal S1 est transmis à la première borne 60 par les moyens de génération 7 et la porte de transmission 20. Par exemple, le signal S1 peut être une impulsion de courant, de type Dirac, généré par un passage très court à l'état passant de la porte de transmission 20.

Si la piste métallique 6 est sectionnée, c'est-à-dire par exemple si une attaque par sondage a eu lieu, le premier signal S1 n'est pas transmis au module d'interface 5 qui ne transmet donc pas la tension Vdd, ou signal de contrôle CTR, aux moyens de contrôle 4. Dans cette première configuration, les moyens de contrôle 4 sont configurés pour générer un signal d'alarme en l'absence du signal de contrôle CTR.

Si la piste métallique 6 n'est pas sectionnée, c'est-à-dire si aucune attaque par sondage n'a eu lieu, le premier signal S1 est bien transmis au module d'interface 5 qui envoie le signal de contrôle CTR aux moyens de contrôle 4, qui ne génèrent donc pas de signal d'alarme.

Dans la deuxième configuration, la porte de transmission 20 est bloquée et le troisième transistor TR3 est passant. La première borne 60 de la piste métallique 6 est donc connectée à la masse GND.

Ainsi, dans cette deuxième configuration, la piste métallique 6 se comporte comme une antenne réceptrice. En cas d'attaque par injection de faute électromagnétique, c'est-à-dire en présence d'un champ électromagnétique particulièrement intense au travers du bouclier BCL, un courant est généré dans la piste métallique 60 et transmis au module d'interface 5. Le module d'interface 5 envoie alors le signal de contrôle CTR aux moyens de contrôle 4, qui dans cette deuxième configuration génèrent un signal d'alarme.

Classiquement au démarrage du circuit intégré CI, le dispositif DIS est dans la première configuration, et passe dans la deuxième configuration une fois la vérification effectuée.

Le dispositif DIS comporte en outre des moyens de réglage 8 permettant de régler la sensibilité des moyens de détection 3.

Les moyens de réglage 8 comportent ici une pluralité de transistors TR4, TR5, et TR6 couplés en parallèle entre la masse GND et la deuxième borne 61.

Les transistors sont commandés par les moyens de contrôle 4 via des signaux SC4, SC5 et SC6. En fonction de la sensibilité souhaitée, les moyens de contrôle 4 mettent à l'état passant un ou plusieurs transistors. Les moyens de réglage 8 agissent donc ici comme une résistance variable.

Ainsi, en réglant la valeur de résistance, le potentiel sur la deuxième borne 61 résultant de la présence d'un champ électromagnétique d'intensité donnée varie également.

En d'autres termes, le module d'interface 5 ne se déclenchant qu'à partir d'une certaine valeur de potentiel sur la première entrée d'horloge C1, et donc sur la deuxième borne 61, les moyens de réglage 8 permettent de définir un seuil de détection du dispositif DIS.

La valeur du seuil de détection est obtenue durant une phase de caractérisation du dispositif DIS, en réalisant volontairement des attaques par injection de fautes à l'aide d'une bobine d'injection électromagnétique émettant des impulsions électromagnétiques d'amplitudes différentes, et en déterminant une amplitude seuil à partir de laquelle l'impulsion permet une injection de faute.

On règle ensuite la résistance du bouclier BCL de manière à ce que des champs d'amplitude plus faible que l'amplitude seuil ne déclenchent pas le module d'interface.

Le seuil de détection est donc propre à chaque circuit.

Ceci est particulièrement avantageux lorsque le circuit intégré CI est utilisé dans un environnement comportant des perturbations électromagnétiques, par exemple à proximité d'autres appareils électroniques, afin que les moyens de détection 3 ne soient pas déclenchés par lesdites perturbations mais uniquement par une attaque électromagnétique.

Le dispositif DIS comporte en outre des moyens de protection 9 configurés pour protéger le dispositif DIS contre les surtensions.

En effet, lors d'une attaque par injection de faute, l'intensité du champ électromagnétique généré par la bobine d'injection n'est pas prévisible, et il est possible que des courants trop importants soient générés dans le dispositif DIS, ce qui peut endommager le circuit.

Les moyens de protection 9 comportent deux paires de diodes 90 et 91.

La première paire de diodes 90 comporte une première diode D1 et une deuxième diode D2 montées en série, l'anode de la première diode D1 étant connectée à la première borne 60 et la cathode de la deuxième diode D2 étant connectée à la borne d'alimentation du circuit intégré délivrant le signal Vdd.

La deuxième paire de diodes 91 comporte une troisième diode D3 et une quatrième diode D4 montées en série, l'anode de la troisième diode D3 étant connectée à la masse GND et la cathode de la quatrième diode D4 étant connectée à la deuxième borne 61.

Le circuit électronique intégré CI décrit précédemment et illustré aux figures 1 à 3 peut classiquement être intégré à un système comprenant une unité de traitement, classiquement dans une unité de traitement d'une carte à puce, d'un ordinateur, ou d'un terminal de téléphonie mobile, qui nécessitent la mise en oeuvre d'opérations sécurisées.

Les figures 4 et 5 illustrent des systèmes informatiques comportant des unités de traitement sécurisées dans lesquelles sont réalisés des circuits intégrés CI selon un mode de réalisation de l'invention. La figure 4 illustre une carte à puce CP et la figure 5 illustre un ordinateur portable CMP. La carte à puce CP et l'ordinateur portable CMP comportent par exemple un microprocesseur comportant un circuit intégré selon un mode de réalisation de l'invention.

Les exemples d'application de l'invention ne se limitent pas à ceux illustrés sur les figures 4 et 5, et l'homme du métier saura appliquer les modes de mise en oeuvre et de réalisation de l'invention décrit précédemment et illustrés aux figures 1 à 3 à d'autres systèmes connus.

Les modes de mise en oeuvre et de réalisation présentés ici ne sont nullement limitatifs. Notamment, bien qu'il ait été décrit précédemment un circuit intégré comportant un seul dispositif, il serait tout à fait possible d'envisager un circuit intégré comportant plusieurs modules sécurisés réalisés dans le substrat, chacun de ces modules étant associé à un dispositif de protection distinct avec le bouclier réalisé au dessus du module.

Et, bien qu'il ait été décrit le schéma électrique d'un dispositif DIS comportant une seule piste métallique 6, il convient de noter que dans le cas d'un dispositif comportant une pluralité de pistes métalliques, chacune de ces pistes serait utilisée dans la première configuration comme moyen de vérification, tandis que dans la deuxième configuration l'une d'elle ou plusieurs d'entre elles seraient utilisées comme antenne réceptrice.

## Revendications

1. Procédé de protection d'un circuit intégré (CI) contre les attaques par injection de fautes à l'aide d'un rayonnement électromagnétique externe, ledit circuit intégré (CI) comportant un bouclier métallique (BCL) réalisé dans sa partie d'interconnexion (INT), le procédé comprenant une détection via le bouclier métallique (BCL) dudit rayonnement électromagnétique, la détection comprenant un placement du bouclier (BCL) dans une configuration d'antenne réceptrice et une détection d'au moins un signal supérieur à un seuil circulant dans le bouclier (BCL), le procédé comprenant un réglage de la sensibilité de la détection comportant une connexion d'une résistance variable au bouclier métallique (BCL).

2. Procédé selon la revendication 1, comprenant préalablement à ladite détection, une vérification de l'intégrité du bouclier métallique (BCL) comprenant un contrôle d'une interruption éventuelle de la circulation d'un courant dans le bouclier (BCL).

3. Circuit intégré comportant un dispositif de protection (DIS) comprenant un bouclier métallique (BCL) réalisé dans sa partie d'interconnexion (INT), le dispositif de protection comprenant des moyens de détection (3) comprenant le bouclier métallique (BCL) et configurés pour détecter une présence d'un rayonnement électromagnétique externe représentatif d'une attaque par injection de fautes, dans lequel les moyens de détection (3) comportent des premiers moyens de commande (CMD) aptes à placer le bouclier (BCL) dans une configuration d'antenne réceptrice, un module d'interface (5) couplé au bouclier (BCL) et configurés pour détecter un premier signal électrique circulant dans l'antenne et délivrer un premier signal de contrôle, et des moyens de contrôle (4) configurés pour recevoir le premier signal de contrôle, et dans lequel le circuit intégré comprend en outre des moyens de réglage (8) agissant comme une résistance variable connectés au bouclier et configurés pour régler la sensibilité des moyens de détection.

4. Circuit selon la revendication 3, comportant des moyens de vérification (2) configurés pour vérifier l'intégrité du bouclier (BCL).

5. Circuit selon l'une des revendications 3 et 4, dans lequel les moyens de vérification (2) comprennent des deuxièmes moyens de commande (CMD) configurés pour transmettre un deuxième signal électrique (S1) à une entrée du bouclier (BCL), le module d'interface (5) configuré pour détecter la présence du deuxième signal (S1) électrique à la sortie du bouclier (BCL) et délivrer un deuxième signal de contrôle, et les moyens de contrôle sont configurés pour recevoir le deuxième signal de contrôle.

6. Circuit selon la revendication 5, comprenant un étage de commande (CMD) configurable par les moyens de contrôle (4) et formant dans une première configuration les premiers moyens de commande et dans une deuxième configuration les deuxièmes moyens de commande.

7. Circuit selon la revendication 6, dans lequel le bouclier métallique (BCL) comporte au moins une piste métallique (6) comportant une première borne (60) et une deuxième borne (61), et dans lequel l'étage configurable (CMD) comporte un transistor (TR3) connecté entre la première borne (60) de la piste métallique et la masse (GND), un générateur (7) configuré pour générer le deuxième signal électrique (S1), une porte de transmission (20) connectée entre la première borne (60) et le générateur (7), et les moyens de contrôle (4) sont configurés pour commander le transistor (TR3) et la porte de transmission (20), de sorte que dans la première configuration le transistor (TR3) est bloqué et la porte de transmission (20) est dans un état passant, et dans la deuxième configuration le transistor (TR3) est passant et la porte de transmission (20) est bloquée.

8. Circuit selon l'une quelconque des revendications 3 à 7, dans lequel le module d'interface (5) comporte une première bascule D (50) comportant une première entrée (D1) connectée à une borne d'alimentation destinée à délivrer une tension d'alimentation (Vdd), une première entrée d'horloge (C1) connectée à la deuxième borne (61), et une première sortie (Q1), et une deuxième bascule D (51) comportant une deuxième entrée (D2) connectée à la première sortie (Q1), une deuxième entrée d'horloge (C2) connectée à un générateur d'horloge apte à délivrer un signal d'horloge (CLK), et une deuxième sortie (Q2) configurée pour délivrer le premier ou le deuxième signal de contrôle (CTR) respectivement à la réception du premier ou du deuxième signal électrique sur la première entrée d'horloge (C1).

9. Circuit selon l'une quelconque des revendications 3 à 8, dans lequel le dispositif (DIS) comprend en outre des moyens de protection (9) au bouclier (6) et configurés pour protéger le dispositif (DIS) contre des surtensions.

10. Circuit selon l'une quelconque des revendications 3 à 9, dans lequel le bouclier (BCL) comporte plusieurs pistes métalliques.

11. Système comprenant un circuit intégré (CI) selon l'une quelconque des revendications 3 à 10.

12. Système selon la revendication 11, le système étant une carte à puce (CP) ou un système informatique (CMP).

## Patentansprüche

1. Verfahren zum Schutz einer integrierten Schaltung (CI) vor Angriffen durch Fehlerinjektion mit Hilfe einer externen elektromagnetischen Strahlung, wobei die integrierte Schaltung (CI) einen Metallschild (BCL) umfasst, der in ihrem Anschlussteil (INT) ausgeführt ist, wobei das Verfahren ein Detektieren der elektromagnetischen Strahlung über den Metallschild (BCL) umfasst, wobei das Detektieren ein Versetzen des Schildes (BCL) in eine Empfangsantennenkonfiguration und ein Detektieren von mindestens einem Signal oberhalb einer Schwelle umfasst, das in dem Schild (BCL) fließt, wobei das Verfahren ein Regeln der Empfindlichkeit der Detektion umfasst, das ein Verbinden eines variablen Widerstands mit dem Metallschild (BCL) umfasst.

2. Verfahren nach Anspruch 1, das vor dem Detektieren ein Verifizieren der Integrität des Metallschildes (BCL) umfasst, das ein Überprüfen einer eventuellen Unterbrechung des Flusses eines Stroms im Schild (BCL) umfasst.

3. Integrierte Schaltung, die eine Schutzvorrichtung (DIS) umfasst, die einen Metallschild (BCL) umfasst, der in ihrem Anschlussteil (INT) ausgeführt ist, wobei die Schutzvorrichtung Detektionsmittel (3) umfasst, die den Metallschild (BCL) umfassen und so konfiguriert sind, dass sie ein Vorhandensein einer externen elektromagnetischen Strahlung, die für einen Angriff durch Fehlerinjektion repräsentativ ist, detektieren, wobei die Detektionsmittel (3) erste Ansteuermittel (CMD) umfassen, die in der Lage sind, den Schild (BCL) in eine Empfangsantennenkonfiguration zu versetzen, ein Schnittstellenmodul (5), das mit dem Schild (BCL) gekoppelt und so konfiguriert ist, dass es ein erstes elektrisches Signal, das in der Antenne fließt, detektiert und ein erstes Steuersignal liefert, und Steuermittel (4), die so konfiguriert sind, dass sie das erste Steuersignal empfangen, und wobei die integrierte Schaltung weiter Regelmittel (8) umfasst, die als variabler Widerstand wirken, der mit dem Schild verbunden wird und so konfiguriert ist, dass er die Empfindlichkeit der Detektionsmittel regelt.

4. Schaltung nach Anspruch 3, die Verifikationsmittel (2) umfasst, die so konfiguriert sind, dass sie die Integrität des Schildes (BCL) verifizieren.

5. Schaltung nach einem der Ansprüche 3 und 4, wobei die Verifikationsmittel (2) zweite Ansteuermittel (CMD) umfassen, die so konfiguriert sind, dass sie ein zweites elektrisches Signal (S1) an einen Eingang des Schildes (BCL) übertragen, wobei das Schnittstellenmodul (5) so konfiguriert ist, dass es das Vorhandensein des zweiten elektrischen Signals (S1) am Ausgang des Schildes (BCL) detektiert und ein zweites Steuersignal liefert, und die Steuermittel so konfiguriert sind, dass sie das zweite Steuersignal empfangen.

6. Schaltung nach Anspruch 5, die eine Ansteuerstufe (CMD) umfasst, die von den Steuermitteln (4) konfiguriert werden kann und in einer ersten Konfiguration die ersten Ansteuermittel und in einer zweiten Konfiguration die zweiten Ansteuermittel bildet.

7. Schaltung nach Anspruch 6, wobei der Metallschild (BCL) mindestens eine Metallbahn (6) umfasst, die eine erste Klemme (60) und eine zweite Klemme (61) umfasst, und wobei die konfigurierbare Stufe (CMD) einen Transistor (TR3), der zwischen die erste Klemme (60) der Metallbahn und die Masse (GND) geschaltet ist, einen Generator (7), der so konfiguriert ist, dass er das zweite elektrische Signal (S1) erzeugt, ein Übertragungsgatter (20), das zwischen die erste Klemme (60) und den Generator (7) geschaltet ist, umfasst, und die Steuermittel (4) so konfiguriert sind, dass sie den Transistor (TR3) und das Übertragungsgatter (20) so ansteuern, dass in der ersten Konfiguration der Transistor (TR3) gesperrt ist und das Übertragungsgatter (20) sich in einem leitenden Zustand befindet, und in der zweiten Konfiguration der Transistor (TR3) leitend ist und das Übertragungsgatter (20) gesperrt ist.

8. Schaltung nach einem der Ansprüche 3 bis 7, wobei das Schnittstellenmodul (5) ein erstes D-Flip-Flop (50), das einen ersten Eingang (D1), der mit einer Versorgungsklemme verbunden ist, die dazu bestimmt ist, eine Versorgungsspannung (Vdd) zu liefern, einen ersten Takteingang (C1), der mit der zweiten Klemme (61) verbunden ist, und einen ersten Ausgang (Q1) umfasst, und ein zweites D-Flip-Flop (51) umfasst, das einen zweiten Eingang (D2), der mit dem ersten Ausgang (Q1) verbunden ist, einen zweiten Takteingang (C2), der mit einem Taktgenerator verbunden ist, der in der Lage ist, ein Taktsignal (CLK) zu liefern, und einen zweiten Ausgang (Q2) umfasst, der so konfiguriert ist, dass er das erste oder das zweite Steuersignal (CTR) jeweils beim Empfang des ersten bzw. des zweiten elektrischen Signals am ersten Takteingang (C1) liefert.

9. Schaltung nach einem der Ansprüche 3 bis 8, wobei die Vorrichtung (DIS) weiter Schutzmittel (9) am Schild (6) umfasst, die so konfiguriert sind, dass sie die Vorrichtung (DIS) vor Überspannungen schützen.

10. Schaltung nach einem der Ansprüche 3 bis 9, wobei der Schild (BCL) mehrere Metallbahnen umfasst.

11. System, das eine integrierte Schaltung (CI) nach einem der Ansprüche 3 bis 10 umfasst.

12. System nach Anspruch 11, wobei das System eine Chipkarte (CP) oder ein Informatiksystem (CMP) ist.

## Claims

1. Method for protecting an integrated circuit (CI) against fault injection attacks by means of external electromagnetic radiation, said integrated circuit (CI) including a metal shield (BCL) formed in its interconnection part (INT), the method comprising detection via the metal shield (BCL) of said electromagnetic radiation, the detection comprising placing the shield (BCL) in a receiving antenna configuration and detecting at least one signal above a threshold flowing through the shield (BCL), the method comprising adjusting the detection sensitivity including a connection of a variable resistor to the metal shield (BCL).

2. Method according to claim 1, comprising prior to said detection, checking the integrity of the metal shield (BCL) comprising a check for any interruption of the current flow in the shield (BCL).

3. Integrated circuit including a protection device (DIS) comprising a metal shield (BCL) formed in its interconnection part (INT), the protection device comprising detection means (3) comprising the metal shield (BCL) and configured to detect a presence of external electromagnetic radiation representative of a fault injection attack, wherein the detection means (3) include first control means (CMD) adapted to place the shield (BCL) in a receiving antenna configuration, an interface module (5) coupled to the shield (BCL) and configured to detect a first electrical signal flowing in the antenna and deliver a first control signal, and control means (4) configured to receive the first control signal, and wherein the integrated circuit further comprises adjusting means (8) acting as a variable resistance connected to the shield and configured to adjust the sensitivity of the detection means.

4. Circuit according to claim 3, including verification means (2) configured to verify the integrity of the shield (BCL) .

5. Circuit according to any one of claims 3 and 4, wherein the verification means (2) comprise second control means (CMD) configured to transmit a second electrical signal (SI) to an input of the shield (BCL), the interface module (5) configured to detect the presence of the second electrical signal (SI) at the output of the shield (BCL) and deliver a second control signal, and the control means are configured to receive the second control signal.

6. Circuit according to claim 5, comprising a control stage (CMD) configurable by the control means (4) and forming in a first configuration the first control means and in a second configuration the second control means.

7. Circuit according to claim 6, wherein the metal shield (BCL) includes at least one metal track (6) including a first terminal (60) and a second terminal (61), and wherein the configurable stage (CMD) includes a transistor (TR3) connected between the first terminal (60) of the metal track and the ground (GND), a generator (7) configured to generate the second electrical signal (S1), a transmission gate (20) connected between the first terminal (60) and the generator (7), and the control means (4) are configured to control the transistor (TR3) and the transmission gate (20), such that in the first configuration the transistor (TR3) is blocked and the transmission gate (20) is in a conducting state, and in the second configuration the transistor (TR3) is conducting and the transmission gate (20) is blocked.

8. Circuit according to any one of claims 3 to 7, wherein the interface module (5) includes a first D flip flop (50) including a first input (D1) connected to a supply terminal for supplying a supply voltage (Vdd), a first clock input (C1) connected to the second terminal (61), and a first output (Q1), and a second D flip flop (51) including a second input (D2) connected to the first output (Q1), a second clock input (C2) connected to a clock generator capable of delivering a clock signal (CLK), and a second output (Q2) configured to deliver the first or the second control signal (CTR) respectively on receiving the first or second electrical signal on the first clock input (C1).

9. Circuit according to any one of claims 3 to 8, wherein the device (DIS) further comprises protection means (9) to the shield (6) and configured to protect the device (DIS) against power surges.

10. Circuit according to any one of claims 3 to 9, wherein the shield (BCL) includes a plurality of metal tracks.

11. System comprising an integrated circuit (CI) according to any one of claims 3 to 10.

12. System according to claim 11, the system being a chip card (CP) or a computer system (CMP).
